# EUROPÄISCHE PATENTSCHRIFT

(11) **EP 3 267 420 B1**
(45) Veröffentlichungstag und Bekanntmachung des Hinweises auf die Patenterteilung: **17.06.2020**
(21) Anmeldenummer: 17177127.2
(22) Anmeldetag: 21.06.2017
(51) Int. Cl.: G08G 1/0967, B60Q 1/08, B60Q 1/24, G08G 1/00, B60W 30/165, G05D 1/02

(54) **VERFAHREN ZUR STEUERUNG EINER LICHTEINHEIT EINER KRAFTFAHRZEUGAUSSENBELEUCHTUNG, KRAFTFAHRZEUG, FAHRZEUGEXTERNE EINRICHTUNG UND SYSTEM**
METHOD FOR CONTROLLING A LIGHT UNIT OF A VEHICLE EXTERNAL LIGHT UNIT, MOTOR VEHICLE, EXTERNAL DEVICE AND SYSTEM
PROCÉDÉ DE COMMANDE D'UNE UNITÉ LUMINEUSE D'UN ÉCLAIRAGE EXTÉRIEUR DE VÉHICULE AUTOMOBILE, VÉHICULE AUTOMOBILE ET DISPOSITIF EXTERNE DE VÉHICULE ET SYSTÈME

(30) Priorität: 28.06.2016 DE 102016211649
(43) Veröffentlichungstag der Anmeldung: 10.01.2018
(73) Patentinhaber: AUDI AG, 85045 Ingolstadt (DE)
(72) Erfinder: Kumpf, Gerhard, 85055 Ingolstadt (DE)

(56) Entgegenhaltungen:
- DE-A1-102011 118 534
- DE-A1-102013 006 687
- DE-A1-102014 213 131
- JP-A- 2000 331 282

## Beschreibung

Die Erfindung geht aus von einem Verfahren zur Steuerung mindestens einer Lichteinheit einer Kraftfahrzeugaußenbeleuchtung eines Kraftfahrzeugs in einer Fahrzeugkolonne mit mindestens einem zweiten Kraftfahrzeug sowie von einem Kraftfahrzeug mit einer Kraftfahrzeugaußenbeleuchtung mit mindestens einer Lichteinheit gemäß dem Oberbegriff der jeweiligen unabhängigen Ansprüche.

Üblicherweise leuchtet ein Bremslicht eines Kraftfahrzeugs solange der Fahrer die Bremse betätigt. Durch das Bremslicht wird nachfolgenden Fahrzeugen singlaisiert, dass das vorausfahrende Fahrzeug gerade verzögert, sodass entsprechend die nachfolgenden Fahrzeuge über den Bremsvorgang des Vordermanns rechtzeitig informiert werden. Andererseits kann jedoch bei längeren Standzeiten eines Kraftfahrzeugs, wie beispielsweise an einer Ampel oder in einem Stau, das Bremslicht jedoch sehr störend sein, und den Fahrer bzw. Beifahrer des dahinter stehenden Fahrzeugs besonders bei Dunkelheit stark blenden, vor allem wenn das Bremslicht LEDs umfasst, die wegen ihres hellen Leuchtens in dieser Situation besonders störend empfunden werden.

Die DE 10 2004 024 514 A1 beschreibt eine Signalisierungseinrichtung an einem Kraftfahrzeug mit einem Signalgeber, einer Motorsteuereinheit und Sensoren zum Erfassen eines Bewegungszustands des Kraftfahrzeugs, wobei das Verhalten des Signalgebers abhängig von einem Status der Motorsteuereinheit und dem von den Sensoren erfassten Bewegungszustand beeinflussbar ist. Der Signalgeber kann dabei ein Bremslicht oder ein Blinklicht darstellen. Hierbei werden jedoch immer, wenn das Bremspedal betätigt wird, auch die Bremslichter aktiviert.

Demgegenüber beschreiben beispielsweise die EP 1 375 252 A2 und die DE 199 53 447 A1 Maßnahmen, wie eine Blendwirkung durch das Bremslicht vermieden oder zumindest reduziert werden kann. Hierzu wird vorgeschlagen, die Bremslichter beim Stillstand des Kraftfahrzeugs zu deaktivieren. Zusätzlich schlägt die DE 199 53 447 A1 vor, ein Abschalten nur dann zu bewirken, wenn eine Abstandselektronik des Kraftfahrzeugs ein unmittelbar nachfolgendes Kraftfahrzeug erfasst.

Da die Bremsleuchten eines Kraftfahrzeugs vor allem jedoch der Sicherheit dienen, ist es wünschenswert, solche Verfahren zum automatischen Abschalten oder Deaktivieren von Bremsleuchten möglichst sicher zu gestalten. Unterschiedliche Verkehrssituationen bergen jedoch auch unterschiedliche Risiken, wobei darüber hinaus auch hinzukommt, dass sich verschiedene Verkehrssituationen durch bekannte Kraftfahrzeugsensoriken nur bedingt charakterisieren lassen, um das jeweilige Gefahrenpotenzial solcher Situationen richtig einschätzen zu können. Damit sind die bekannten Verfahren zur Steuerung des Bremslichts auch nicht besonders flexibel an unterschiedliche Situationen anpassbar.

Die DE 10 2013 006 687 A1 beschreibt ein Verfahren zum Betreiben eines Fahrzeugs während einer Kolonnenfahrt, bei der eine Kolonnen mit einem Führungsfahrzeug gegeben ist. Dabei wird durch ein Fahrerassistenzsystem eines dem Führungsfahrzeug folgenden Fahrzeugs erkannt, welche Position das Fahrzeug innerhalb der Kolonne einnimmt und Beleuchtungseinrichtungen an der Front oder dem Heck des Fahrzeugs in Abhängigkeit von der erkannten Position gesteuert.

Die DE 10 2014 213 131 A1 beschreibt ein Verfahren zum Steuern zumindest einer Beleuchtungsanlage eines Fahrzeugs, wobei ein Kommunikationssignals, das von einer zum Fahrzeug extern angeordneten Sendeeinheit ausgesandt wurde, eingelesen wird und ein Betriebszustand der Beleuchtungsanlage ansprechend auf das eingelesene Kommunikationssignal verändert wird.

Aufgabe der vorliegenden Erfindung ist es daher, ein Verfahren zur Steuerung einer Lichteinheit einer Kraftfahrzeugaußenbeleuchtung und ein Kraftfahrzeug bereitzustellen, welche mehr Flexibilität hinsichtlich der Steuerung der Lichteinheit ermöglichen.

Diese Aufgabe wird gelöst durch ein Verfahren und ein Kraftfahrzeug mit den Merkmalen gemäß der jeweiligen unabhängigen Ansprüche 1 und 6. Vorteilhafte Ausgestaltungen der Erfindung sind in den abhängigen Ansprüchen angegeben.

Unter einer Fahrzeugkolonne sind dabei insbesondere mindestens zwei Fahrzeuge zu verstehen, hier das erste Kraftfahrzeug und das mindestens eine zweite Kraftfahrzeug, die einen vorbestimmten oder vorbestimmbaren Abstand zueinander, insbesondere in Fahrtrichtung, unterschreiten. Umfasst die Fahrzeugkolonne beispielsweise mehr als zwei Kraftfahrzeuge, so wird dieser vorbestimmte oder vorbestimmbare Abstand zwischen je zwei aufeinanderfolgenden Kraftfahrzeugen unterschritten.

Durch die Einbindung einer fahrzeugexternen Einrichtung, wie beispielsweise einer intelligenten Ampel, einer zentralen Datenverarbeitungseinrichtung oder einem Internetserver, zum Beispiel der Cloud, lassen sich vorteilhafterweise deutlich umfassendere Informationen, insbesondere zur Beschreibung verschiedener Verkehrssituationen, bereitstellen, was deutlich mehr Flexibilität und Anpassungsmöglichkeiten bei der Steuerung der Lichteinheit bietet. Beispielsweise kann die Entscheidung, ob das erste Kraftfahrzeug das letzte einer Kolonne darstellet oder nicht, nicht oder zumindest nicht nur ausschließlich auf Basis von Kraftfahrzeugsensoren, wie beispielsweise Abstandssensoren, getroffen werden. Alternativ oder zusätzlich könnten auch GPS-Daten genutzt werden, was es ermöglicht, dass nicht nur Kraftfahrzeuge, die über eine entsprechende Sensorik verfügen, eine geeignete Steuerung der Lichteinheit bereitstellen können, oder dass durch eine Kombination aus Sensordaten und GPS-Daten und deren Redundanz zusätzlich die Verlässlichkeit der Sensordaten überprüft werden kann und damit die Sicherheit erhöht werden kann. Zudem ist auch die Möglichkeit bereitgestellt, dass mehrere Kraftfahrzeuge mit der fahrzeugexternen Einrichtung kommunizieren können, sodass hierdurch deutlich weitreichendere Erfassungsmöglichkeiten bereitgestellt sind als nur durch die in ihrer Reichweite stark begrenzten Sensoren eines einzelnen Kraftfahrzeugs, wodurch sich auch Gefahrensituationen deutlich besser und vorausschauender abschätzen lassen. Auch wird hierdurch die Möglichkeit bereitgestellt, die vom ersten Kraftfahrzeug an die fahrzeugexterne Einrichtung übermittelten Daten zu anderen Zwecken zu nutzen, zum Beispiel für Stauinformationen, Warnmeldungen, zur Verkehrsführung oder Regelung, für eine verkehrsangepasste Ampelschaltung, oder Ähnlichem. Durch das erfindungsgemäße Verfahren wird damit deutlich mehr Flexibilität bezüglich der Datennutzung sowie deutlich bessere und sicherere Anpassungsmöglichkeiten an verschiedenste Verkehrssituationen bereitgestellt.

Die Kommunikation zwischen der fahrzeugexternen Einrichtung und den Kraftfahrzeugen kann dabei im Allgemeinen internetbasiert, z.B. über W-LAN, über Mobilfunk, Infrarot, oder andere kabellose Kommunikationsmöglichkeiten erfolgen.

Bei einer vorteilhaften Ausgestaltung erfasst eine Sensoreinrichtung des ersten Kraftfahrzeugs, insbesondere ein Abstandssensor, die Umgebungsdaten des ersten Kraftfahrzeugs, die an die fahrzeugexterne Einrichtung übermittelt werden, wobei die fahrzeugexterne Einrichtung auf Basis der übermittelten Umgebungsdaten eine Position des ersten Kraftfahrzeugs in Bezug auf die Fahrzeugkolonne ermittelt. Insbesondere lässt sich auf Basis der Umgebungsdaten feststellen, ob das erste Kraftfahrzeug das letzte Kraftfahrzeug der Fahrzeugkolonne darstellt oder nicht. Die Sensoreinrichtung kann beispielsweise eine Rückkamera des ersten Kraftfahrzeugs umfassen. Die von dieser Kamera aufgenommenen Bilddaten können dann an die fahrzeugexterne Einrichtung übermittelt und ausgewertet werden. Beispielsweise kann diese zur Auswertung zunächst überprüfen, ob den Kamerabildern ein dem ersten Kraftfahrzeug nachfolgendes Kraftfahrzeug zu entnehmen ist. Ist dies nicht der Fall, so stellt das erste Kraftfahrzeug das letzte Kraftfahrzeug der Kolonne dar. Wird dagegen ein weiteres Kraftfahrzeug im Kamerabild erkannt, kann ermittelt werden, in welchem Abstand sich dieses weitere Kraftfahrzeug vom ersten Kraftfahrzeug befindet. Dieser Abstand kann dann mit einem vorbestimmten Grenzwert verglichen werden. Ist der Abstand kleiner als der Grenzwert, so stellt das erste Kraftfahrzeug nicht das letzte der Kolonne dar, andernfalls schon. Als Sensoreinrichtung kommen auch andere Sensoren in Frage, zum Beispiel ein Radar. Zudem kann die Sensoreinrichtung nicht nur ausgelegt sein, nachfolgende Verkehrsteilnehmer zu erfassen, sondern auch vorausfahrende, zum Beispiel durch frontseitig am ersten Kraftfahrzeug angeordnete Sensoren. Damit müssen vorteilhafterweise die von der Sensoreinrichtung erfassten Sensordaten nicht selbst vom Kraftfahrzeug ausgewertet werden, sondern dies kann von der fahrzeugexternen Einrichtung erfolgen. Dadurch können wiederum Rechenleistung und sonstige Komponenten im Kraftfahrzeug selbst eingespart werden.

Bei einer weiteren vorteilhaften Ausgestaltung der Erfindung ermittelt das erste Kraftfahrzeug als die Positionsinformation eine erste geographische Positionsinformation einer aktuellen Position des ersten Kraftfahrzeugs, insbesondere in Form von GPS Koordinaten des ersten Kraftfahrzeugs, und übermittelt diese an die fahrzeugexterne Einrichtung. Die Übermittlung der ersten geographischen Positionsinformation kann dabei alternativ oder zusätzlich zu einer Übermittlung von Umgebungsdaten erfolgen. Beispielsweise lässt sich die Position des ersten Kraftfahrzeugs in Bezug auf die Fahrzeugkolonne ebenfalls auf Basis der übermittelten GPS Koordinaten bestimmen.

Zu diesem Zweck ist es vorteilhaft, dass die fahrzeugexterne Einrichtung von dem mindesten einen zweiten Kraftfahrzeug der Fahrzeugkolonne ebenfalls eine zweite geographische Positionsinformation des mindestens einen zweiten Kraftfahrzeugs empfängt, wobei dann eine Position des ersten Kraftfahrzeugs in Bezug auf die Fahrzeugkolonne auf Basis der ersten und zweiten geographischen Positionsinformation ermittelt wird. Beispielsweise können auch alle Kraftfahrzeuge einer Fahrzeugkolonne ihre geographischen Positionen in Form von GPS Koordinaten an die fahrzeugexterne Einrichtung übermitteln. Auf Basis dieser Positionen lässt sich vorteilhafterweise jede Position jedes Kraftfahrzeugs dieser Kolonne ermitteln. Insbesondere gilt es dabei festzustellen, welches der Fahrzeuge das letzte in der Kolonne darstellt, da hinsichtlich der Steuerung der Lichteinheit unterschiedliche Maßstäbe bezüglich der Sicherheit ja nach Position in der Kolonne anzulegen sind. Befindet sich ein Kraftfahrzeug beispielsweise am Ende einer Kolonne, so kann es unter Umständen fatale Folgen haben, das Bremslicht im Stillstand zu deaktivieren, während ein derartiges Sicherheitsrisiko für ein Kraftfahrzeug innerhalb der Kolonne, das heißt nicht an letzter Position, nicht gegeben ist oder zumindest in reduziertem Maße. Die Kraftfahrzeugposition bezüglich der Fahrzeugkolonne kann dabei auch durch die betreffenden Fahrzeuge selbst ermittelt werden. Beispielsweise können sowohl das erste als auch das zweite Kraftfahrzeug Daten an die fahrzeugexterne Einrichtung übermitteln, die ihrerseits die empfangenen Daten an die jeweiligen Kraftfahrzeuge zurückschickt, sodass beispielsweise das erste Kraftfahrzeug entsprechend auch über die Positionsinformation des zweiten Kraftfahrzeugs verfügt, und umgekehrt. Besonders vorteilhaft ist es jedoch, wenn die fahrzeugexterne Einrichtung die empfangenen Daten selbst auswertet, da somit vorteilhafterweise die von der fahrzeugexternen Einrichtung bereitgestellten Kapazitäten, insbesondere Rechenleistung, besonders effektiv genutzt werden können.

Die Übermittlung einer geographischen Positionsinformation, wie beispielsweise durch GPS-Koordinaten, kann jedoch nicht nur als Alternative zur Ermittlung der Position in Bezug auf die Kolonne aus den Umgebungsdaten dienen. Zum einen können solche geographischen Positionsdaten auch genutzt werden, um die aus den Umgebungsdaten ermittelten Ergebnisse zu verifizieren, was die Sicherheit deutlich erhöht. Denn gerade wenn Sensoren wie Kameras genutzt werden, um Abstandsinformationen nachfolgender oder vorrausfahrender Fahrzeuge zu ermitteln, sind solche Daten gerade bei schlechten Wetterbedingungen, wie bei starkem Regen oder Nebel, nur wenig verlässlich. Zum anderen kann die geographische Positionsinformation zusätzlich auch genutzt werden, um weitere Informationen bezüglich einer Verkehrssituation daraus abzuleiten. Beispielsweise kann anhand der geographischen Positionsinformation abgeleitet werden, ob sich das erste Kraftfahrzeug innerhalb einer Ortschaft oder außerorts z.B. auf einer Autobahn befindet. Nicht zuletzt aufgrund der unterschiedlichen durchschnittlichen Geschwindigkeiten und Geschwindigkeitsvorschriften innerorts und außerorts können daraus auch unterschiedliche Vorgaben bezüglich Sicherheit abgeleitet werden, was damit auch bei den ansteuervorgaben der Lichteinheit berücksichtigt werden kann, wie zum Beispiel durch unterschiedlich lange Latenzzeiten bis zum Abschalten der Bremsleuchte oder durch ein automatisches Einschalten einer Warnblinkanlage.

Weiterhin ist es eine besonders vorteilhafte Ausgestaltung der Erfindung, wenn die fahrzeugexterne Einrichtung die empfangenen Daten auswertet und in Abhängigkeit von der Auswertung die Steuerinformation bestimmt, die an das erste Kraftfahrzeug übermittelt wird. Beispielsweise kann die fahrzeugexterne Einrichtung auf Basis der empfangenen Daten, insbesondere auch in Zusammenschau mit von anderen Kraftfahrzeugen empfangenen Daten, ermitteln an welcher Position einer Fahrzeugkolonne sich das erste Kraftfahrzeug befindet und eine entsprechende Steuerinformation an das erste Kraftfahrzeug, sowie insbesondere auch an alle übrigen Kraftfahrzeuge der Kolonne übermitteln. Die Steuerinformation ist damit abhängig von der Position des Kraftfahrzeugs in der Kolonne, sowie ggf. auch von der geographischen Position des Kraftfahrzeugs oder daraus abgeleiteten Informationen.

Bei einer weiteren vorteilhaften Ausgestaltung wird die Lichteinheit derart gesteuert, dass unter zumindest einer der Bedingungen, dass eine Geschwindigkeit des ersten Kraftfahrzeugs kleiner ist als ein vorbestimmter Grenzwert, insbesondere dass sich das erste Kraftfahrzeug im Stillstand befindet, dass das erste Kraftfahrzeug nicht das letzte Kraftfahrzeug der Fahrzeugkolonne darstellt, und dass ein Motor des ersten Kraftfahrzeugs abgeschaltet ist, eine eingeschaltete Bremsleuchte der Lichteinheit ausgeschaltet wird. Dabei ist es bevorzugt, dass zum Ausschalten der eingeschalteten Bremsleuchte auf jeden Fall die Bedingung erfüllt sein muss, dass das Kraftfahrzeug nicht das letzte Kraftfahrzeug der Fahrzeugkolonne darstellt, da dies sonst ein hohes Risiko für Auffahrunfälle bergen würde. Des Weiteren ist es der Sicherheit zuträglich, wenn das Abschalten einer eingeschalteten Bremsleuchte nur unterhalb einer vorbestimmten Grenzgeschwindigkeit, das heißt also nur bei sehr langsamer Fahrt oder insbesondere auch nur bei Stillstand möglich ist. In gleicher Weise erhöht auch die Voraussetzung eines abgeschalteten Kraftfahrzeugmotors die Sicherheit. Das Erfülltsein des Geschwindigkeitskriteriums kann beispielsweise vom ersten Kraftfahrzeug selbst überprüft werden. Beispielsweise kann es auch vorgesehen sein, dass die Daten vom ersten Kraftfahrzeug nur dann an die fahrzeugexterne Einrichtung übermittelt werden, wenn das Kraftfahrzeug den vorbestimmten Geschwindigkeitsgrenzwert unterschreitet, oder insbesondere sich im Stillstand befindet. Gleiches gilt auch für das Feststellen eines Abschaltens des Motors des ersten Kraftfahrzeugs. Alternativ kann auch die fahrzeugexterne Einrichtung auf Basis der an diese übermittelten Daten, wie beispielsweise auf der Basis von GPS-Daten, die Geschwindigkeit des ersten Kraftfahrzeugs ermitteln und nur bei festgestellter Unterschreitung der Grenzgeschwindigkeit bzw. festgestelltem Stillstand des Kraftfahrzeugs eine entsprechende Steuerinformation an das erste Kraftfahrzeug zum Abschalten der eingeschalteten Bremsleuchte übermitteln. Zusätzlich kann es auch vorgesehen sein, zum Beispiel als weitere Bedingung, dass ein Abschalten einer eingeschalteten Bremsleuchte nur nach einer vorbestimmten Latenzzeit nach festgestelltem Fahrzeugstillstand oder nach Abschaltung des Motors möglich ist, wie beispielsweise erst nach 2 bis 3 Sekunden. Auch ist es beispielsweise vorteilhaft, wenn die Daten vom ersten Kraftfahrzeug erst nach Ablauf der vorbestimmten Latenzzeit nach Stillstand des Kraftfahrzeugs oder Abschalten des Motors an die fahrzeugexterne Einrichtung übermittelt werden, da so eine unnötige Datenübermittlung vermieden werden kann.

Bei einer weiteren vorteilhaften Ausgestaltung wird die Lichteinheit derart gesteuert, dass unter zumindest einer der Bedingungen, dass die Geschwindigkeit des ersten Kraftfahrzeugs kleiner ist als ein vorbestimmter Grenzwert, insbesondere dass sich das erste Kraftfahrzeug im Stillstand befindet, dass das erste Kraftfahrzeug das letzte Kraftfahrzeug der Kolonne darstellt, dass die erste geographische Position des ersten Kraftfahrzeugs ein vorbestimmtes Kriterium erfüllt, insbesondere dass sich das erste Kraftfahrzeug außerorts befindet, und dass ein Motor des ersten Kraftfahrzeugs abgeschaltet ist, eine deaktivierte Warnblinkanlage der Lichteinheit automatisch aktiviert wird. Eine automatische Steuerung der Warnblinkanlage zusätzlich oder alternativ zur Steuerung der Bremsleuchte bietet damit vorteilhafterweise noch ein zusätzliches Maß an Sicherheit. Dies ist insbesondere dann relevant, wenn das erste Kraftfahrzeug zum einen das letzte Kraftfahrzeug in einer Fahrzeugkolonne darstellt und dieses sich zusätzlich außerorts befindet, beispielsweise in einem Stau auf einer Autobahn. Die Detektion des Stillstands oder ein Abschalten des Motors stellen dabei nicht unbedingt erforderliche Bedingungen da. Vielmehr ist es vorteilhaft, wenn eine automatische Aktivierung der Warnblinkanlage erfolgt, wenn bereit ein unterschreiten einer Grenzgeschwindigkeit erfasst wird, da dies bereits ein hohes Gefahrenpotential auf einer Autobahn birgt.

Zudem kann die Überprüfung auf das Erfülltsein oben beschriebener Bedingungen durch die fahrzeugexterne Einrichtung erfolgen und/oder auch durch das erste Kraftfahrzeug selbst.

Bei einem weiteren Beispiel stellt die fahrzeugexterne Einrichtung eine Anlage zur Steuerung des Straßenverkehrs, wie beispielsweise eine Ampel, dar, wobei der Straßenverkehr in Abhängigkeit von den empfangenen Daten gesteuert wird. Damit wird es vorteilhafterweise ermöglicht, dass die von den Kraftfahrzeugen durch die fahrzeugexterne Einrichtung, insbesondere einer intelligenten Ampel, empfangenen Daten nicht nur zur Steuerung der Lichteinheiten der betreffenden Fahrzeuge, sondern auch zu anderen Zwecken vorteilhaft genutzt werden können. Auch im Falle eines Staus auf der Autobahn können die an die fahrzeugexterne Einrichtung übermittelten Daten der Kraftfahrzeuge genutzt werden, um beispielsweise zusätzlich entsprechende Navigationsinformationen, Stauinformationen oder Warnungen an die Fahrzeug zurückzusenden.

Des Weiteren betrifft die Erfindung ein Kraftfahrzeug gemäß Anspruch 6. Die mit Bezug auf das erfindungsgemäße Verfahren beschriebenen Vorteile gelten in gleicher Weise für das erfindungsgemäße Kraftfahrzeug. Des Weiteren ermöglichen die für das erfindungsgemäße Verfahren und seine Ausgestaltungen beschriebenen Verfahrensschritte die Weiterbildung des erfindungsgemäßen Kraftfahrzeugs durch weitere gegenständliche Merkmale.

Weitere Merkmale, Vorteile und Einzelheiten der Erfindung ergeben sich aus der nachfolgenden Beschreibung bevorzugter Ausführungsbeispiele sowie anhand der Zeichnung.

Dabei zeigen:
- Fig. 1: eine schematische Darstellung einer Fahrzeugkolonne an einer Ampel zur Veranschaulichung eines Verfahrens zum Steuern der Lichteinheit gemäß einem Ausführungsbeispiel der Erfindung; und
- Fig. 2: eine schematische Darstellung einer Fahrzeugkolonne auf einer Autobahn zur Veranschaulichung eines Verfahrens zum Steuern einer Lichteinheit gemäß einem weiteren Ausführungsbeispiel der Erfindung.

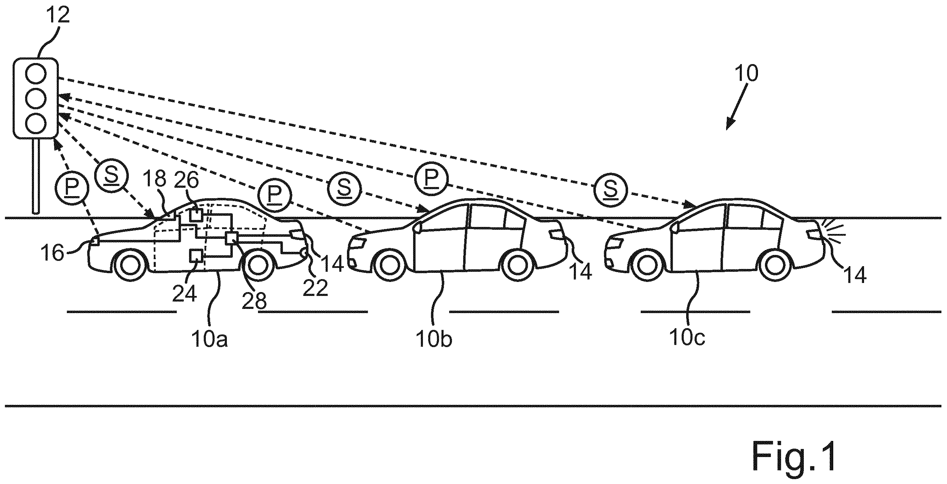

Fig. 1 zeigt eine schematische Darstellung einer Fahrzeugkolonne 10 mit hier exemplarisch drei Kraftfahrzeugen 10a, 10b und 10c vor einer als Ampel 12 ausgebildeten fahrzeugexternen Einrichtung. Jedes dieser Fahrzeuge 10a, 10b, 10c umfasst eine als Bremsleuchte 14 ausgebildete Lichteinheit als Teil einer Kraftfahrzeugaußenbeleuchtung. Weiterhin umfassen die Kraftfahrzeuge 10a, 10b, 10c jeweils eine Sendeeinrichtung 16, eine Empfangseinrichtung 18, Umgebungssensoren 22, wie beispielsweise Abstandssensoren, zum Beispiel in Form einer Kamera oder Radarsensoren, einen Geschwindigkeitssensor 24, eine Positionsbestimmungseinrichtung 26, wie beispielsweise einen GPS Empfänger, und eine Steuereinrichtung 28 zum Ansteuern der Bremsleuchte 14. Diese Komponenten sind dabei in Fig. 1 lediglich für das erste Fahrzeug 10a vor der Ampel 12 dargestellt, können jedoch von den anderen Kraftfahrzeugen 10b, 10c an zweiter und dritter Position der Kolonne 10 ebenfalls umfasst sein.

Die Kraftfahrzeuge 10a, 10b, 10c können nun Daten P ihrerseits erfassen und an die Ampel 12 übermitteln, die ihrerseits wiederum basierend auf den empfangenen Daten P Steuerinformationen S an die betreffenden Kraftfahrzeuge 10a, 10b, 10c sendet, auf Basis welcher die jeweiligen Steuereinrichtungen 28 die jeweiligen Bremsleuchten 14 ansteuert. Die Übermittlung dieser Daten P kann dabei an weitere Bedingungen geknüpft sein. Beispielsweise kann die Steuereinrichtung 28 zunächst überprüfen, ob sich das Kraftfahrzeug 10a, 10b, 10c im Stillstand befindet. Optional kann auch überprüft werden, ob auch der Motor des betreffenden Kraftfahrzeugs 10a, 10b, 10c ausgeschaltet ist. Sind diese Voraussetzungen erfüllt, können beispielsweise die von den Umgebungssensoren 22 erfassten Sensordaten an die Ampel 12 übermittelt werden. Die Ampel 12 wertet daraufhin die empfangenen Sensordaten aus. Insbesondere kann dabei überprüft werden, ob für ein jeweiliges der Kraftfahrzeuge 10a, 10b, 10c ein nachfolgendes Kraftfahrzeug vorhanden ist oder nicht, woraus dann geschlossen werden kann, ob das betreffende Kraftfahrzeug 10a, 10b, 10c, welches die betreffenden Sensordaten an die Ampel 12 übermittelt hat, das letzte Fahrzeug in der Fahrzeugkolonne 10 darstellt oder nicht. Für den Fall, dass ein nachfolgendes Fahrzeug erfasst wird, kann noch überprüft werden, ob sich dieses Kraftfahrzeug ebenfalls im Stillstand befindet, oder ob der Abstand des nachfolgenden Kraftfahrzeugs zum betreffenden Kraftfahrzeug einen vorbestimmten Wert unterschreitet. Weiterhin kann auch überprüft werden, ob bereits eine vorbestimmte Zeit ab dem Stillstand bzw. Abschalten des Motors des betreffenden Kraftfahrzeugs, zum Beispiel 2 bis 3 Sekunden, überschritten ist. Sind diese Bedingungen erfüllt, sendet als Konsequenz die Ampel 12 eine Steuerinformation S an das betreffende Kraftfahrzeug 10a, 10b welches im Falle, dass die Bremsleuchte 14 aktiviert ist, diese deaktiviert. Dieser Deaktivierungszustand kann beispielsweise dann aufgehoben werden, sobald sich das Kraftfahrzeug weiterbewegt. Bleibt das Kraftfahrzeug erneut stehen und wird eventuell der Motor auch wieder abgeschaltet, wie beispielsweise bei einem Start-Stopp-Betrieb, so beginnt das beschriebene Verfahren wieder von vorne.

Wird dagegen auf Basis der vom Kraftfahrzeug, wie beispielsweise in diesem Fall das Kraftfahrzeug 10c, erfassten und an die Ampel 12 übermittelten Sensordaten festgestellt, dass das Kraftfahrzeug 10c das letzte der Fahrzeugkolonne 10 darstellt, so bleibt die Bremsleuchte 14, für den Fall dass diese aktiviert ist, weiterhin eingeschaltet. Dies wird ebenfalls durch die Ampel 12 auf Basis der empfangenen Daten P festgestellt und ein entsprechendes Steuersignal S an das Kraftfahrzeug 10c übermittelt.

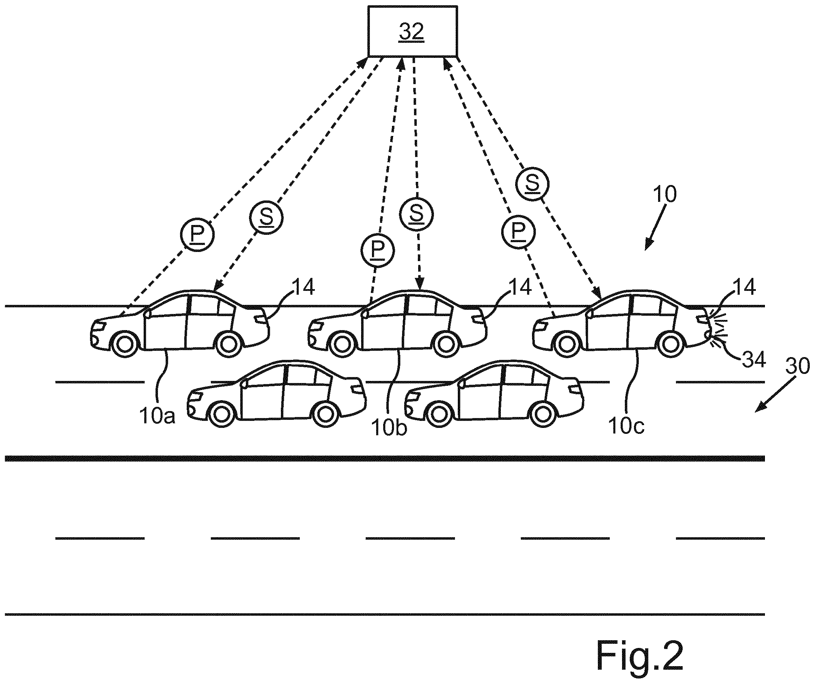

Auf diese Weise wird also bei Fahrzeugen an einer Ampel, wenn der Motor bedingt durch einen Start-Stopp-Betrieb der Fahrzeuge abgeschaltet ist, mit einer Verzögerung von 2 bis 3 Sekunden auch das störende Bremslicht 14 abgeschaltet, sofern sich hinter dem betreffenden Fahrzeug auch ein nachfolgendes Fahrzeug im vorbestimmten Abstand befindet und eine Blendung kann vorteilhafterweise vermieden werden. Damit können insgesamt störende Bremslichter deaktiviert werden und nur bei dem letzten in der Kolonne 10 bleibt das Bremslicht 14 aktiviert. Als Nebeneffekt können diese Signale, das heißt die von den Kraftfahrzeugen 10a, 10b, 10c an die Ampel 12 übermittelten Daten P zur intelligenten Steuerung des Verkehrsflusses, insbesondere zur Ampelsteuerung herangezogen werden. Auf Basis der von der Ampel 12 empfangenen Daten kann beispielsweise auch ermittelt werden, wie viele Fahrzeuge 10a, 10b, 10c gerade an der Ampel stehen. Weiterhin besteht auch die Möglichkeit nicht nur Sensordaten sondern auch die GPS Daten der entsprechenden Kraftfahrzeuge 10a, 10b, 10c auszuwerten, beispielsweise auch als Alternative zu den Sensordaten oder zusätzlich, um durch die daraus entstehende Redundanz eine höhere Verlässlichkeit bezüglich der Daten P zu erzielen. Auch können auf Basis der GPS-Signale zusätzliche Informationen, wie beispielsweise geographische Positionen, herangezogen werden, die ebenfalls bei der Ansteuerung bzw. bei den entsprechenden Steuersignalen S berücksichtigt werden können, um zusätzliche Sicherheitsmaßnahmen bereitzustellen. Insbesondere kann beispielsweise unterschieden werden, ob sich ein entsprechendes Kraftfahrzeug 10a, 10b, 10c gerade innerorts an einer Ampel 12 oder auch außerorts, beispielsweise auf einer Autobahn im Stau befindet. Diese Situation wird nun anhand von Fig. 2 näher erläutert.

Fig. 2 zeigt eine schematische Darstellung einer Fahrzeugkolonne 10 auf einer Autobahn 30. Als Fahrzeugkolonne 10 sind hierbei wiederum exemplarisch drei Kraftfahrzeuge 10a, 10b, 10c dargestellt. Im Übrigen können diese Kraftfahrzeuge die gleichen Komponenten wie zu Fig. 1 erläutert aufweisen, insbesondere um wieder mit einer fahrzeugexternen Einrichtung, die in diesem Beispiel als Internetserver 32 ausgebildet ist, zu kommunizieren. Die Kraftfahrzeuge senden in diesem Beispiel Daten P in Form von GPS-Daten im Falle eines Stillstands der betreffenden Kraftfahrzeuge 10a, 10b, 10c an die fahrzeugexterne Einrichtung 32. Diese wertet die Daten aus, indem sie die jeweiligen Positionen der Kraftfahrzeuge miteinander vergleicht und daraus ableitet, welches dieser Kraftfahrzeuge 10a, 10b, 10c der Fahrzeugkolonne 10 sich am Ende der Kolonne 10 befindet und welches nicht. Daraufhin sendet die fahrzeugexterne Einrichtung 32 entsprechende Steuersignale S an die betreffenden Kraftfahrzeuge 10a, 10b, 10c, insbesondere in Abhängigkeit von ihrer Position innerhalb der Fahrzeugkolonne 10. Das letzte Kraftfahrzeug 10c empfängt beispielsweise ein Steuersignal S, auf dessen Basis eine Warnblinkanlage 34 als Teil der Außenbeleuchtung des Kraftfahrzeugs 10c aktiviert wird, um den nachfolgenden Verkehr auf die Stausituation aufmerksam zu machen. Im Gegensatz dazu empfangen die Kraftfahrzeuge 10a und 10b Steuersignale, auf Basis von welchen die Warnblinkanlage nicht eingeschaltet wird, sondern stattdessen die Bremsleuchte 14, sollte diese aktiviert sein, deaktiviert wird. Auch in diesem Beispiel können die von der fahrzeugexternen Einrichtung 32 empfangenen Daten P wiederum zu weiteren Zwecken verwendet werden, beispielsweise um wiederum entsprechende Stauinformationen an die Kraftfahrzeuge zu übermitteln, oder auch anderen nachfolgenden Kraftfahrzeugen Navigationsvorschläge zur Umgehung des Staus zu unterbreiten, an nachfolgende Kraftfahrzeuge Stauwarnungen auszugeben, oder Ähnlichem.

Insgesamt wird so eine Außenbeleuchtungssteuerung für Kraftfahrzeuge bereitgestellt, die durch Einbindung einer fahrzeugexternen Einrichtung wie beispielsweise einer intelligenten Ampel oder einer Cloud deutlich sicherere und bessere Anpassungsmöglichkeiten bezüglich der Ansteuerung der Lichteinheit von Kraftfahrzeugen bietet.

## Patentansprüche

1. Verfahren zur Steuerung mindestens einer Lichteinheit (14, 34) einer Kraftfahrzeugaußenbeleuchtung eines ersten Kraftfahrzeugs (10a, 10b, 10c) in einer Fahrzeugkolonne (10) mit mindestens einem zweiten Kraftfahrzeug (10a, 10b, 10c),
wobei das erste Kraftfahrzeug (10a, 10b, 10c) Daten (P) umfassend eine Positionsinformation und/oder Umgebungsdaten des ersten Kraftfahrzeugs (10a, 10b, 10c) an eine Einrichtung (12, 32) übermittelt und die fahrzeugexterne Einrichtung (12, 32) basierend auf den empfangenen Daten (P) eine Steuerinformation (S) an das erste Kraftfahrzeug (10a, 10b, 10c) übermittelt und das erste Kraftfahrzeug (10a, 10b, 10c) die mindestens eine Lichteinheit (14, 34) in Abhängigkeit von der übermittelten Steuerinformation (S) steuert, wobei die Steuerinformation (S) berücksichtigt, ob das erste Kraftfahrzeug (10a, 10b, 10c) das letzte der Fahrzeugkolonne (10) darstellt oder nicht,
**dadurch gekennzeichnet, dass**
die Einrichtung eine fahrzeugexterne Einrichtung darstellt und die Lichteinheit (14, 34) derart gesteuert wird, dass, nur wenn das erste Kraftfahrzeug (10a, 10b, 10c) nicht das letzte Kraftfahrzeug (10a, 10b, 10c) der Fahrzeugkolonne (10) darstellt, unter zumindest einer der Bedingungen:
- dass das erste Kraftfahrzeug (10a, 10b, 10c) stillsteht; oder
- dass ein Motor des ersten Kraftfahrzeugs (10a, 10b, 10c) abgeschaltet ist;
eine eingeschaltete Bremsleuchte (14) der Lichteinheit (14, 34) ausgeschaltet wird, wobei die eingeschalteten Bremsleuchte erst nach einer vorbestimmten Latenzzeit nach festgestelltem Fahrzeugstillstand oder nach Abschaltung des Motors abgeschaltet wird.

2. Verfahren nach Anspruch 1,
**dadurch gekennzeichnet, dass**
eine Sensoreinrichtung (22) des ersten Kraftfahrzeugs (10a, 10b, 10c), insbesondere ein Abstandssensor, die Umgebungsdaten des ersten Kraftfahrzeugs (10a, 10b, 10c) erfasst, die an die fahrzeugexterne Einrichtung (12, 32) übermittelt werden, wobei die fahrzeugexterne Einrichtung (12, 32) auf Basis der übermittelten Umgebungsdaten eine Position des ersten Kraftfahrzeugs (10a, 10b, 10c) in Bezug auf die Fahrzeugkolonne (10) ermittelt.

3. Verfahren nach einem der vorhergehenden Ansprüche,
**dadurch gekennzeichnet, dass**
das erste Kraftfahrzeug (10a, 10b, 10c) als die Positionsinformation eine erste geographische Positionsinformation einer aktuellen Position des ersten Kraftfahrzeugs (10a, 10b, 10c) ermittelt, insbesondere in Form von GPS-Koordinaten des ersten Kraftfahrzeugs (10a, 10b, 10c), und an die fahrzeugexterne Einrichtung (12, 32) übermittelt.

4. Verfahren nach einem der vorhergehenden Ansprüche,
**dadurch gekennzeichnet, dass**
die fahrzeugexterne Einrichtung (12, 32) von dem mindestens einen zweiten Kraftfahrzeug (10a, 10b, 10c) der Fahrzeugkolonne (10) ebenfalls eine zweite geographische Positionsinformation des mindestens einen zweiten Kraftfahrzeugs (10a, 10b, 10c) empfängt, wobei eine Position des ersten Kraftfahrzeugs (10a, 10b, 10c) in Bezug auf die Fahrzeugkolonne (10) auf Basis der ersten und zweiten geographischen Positionsinformation ermittelt wird.

5. Verfahren nach einem der vorhergehenden Ansprüche,
**dadurch gekennzeichnet, dass**
die fahrzeugexterne Einrichtung (12, 32) die empfangen Daten (P) auswertet und in Abhängigkeit von der Auswertung die Steuerinformation (S) bestimmt, die an das erste Kraftfahrzeug (10a, 10b, 10c) übermittelt wird.

6. Kraftfahrzeug (10a, 10b, 10c) mit einer Kraftfahrzeugaußenbeleuchtung mit mindestens einer Lichteinheit (14, 34), wobei das Kraftfahrzeug (10a, 10b, 10c) eine Sendeeinrichtung (16), eine Empfangseinrichtung (18), eine Steuereinrichtung (28) und eine Erfassungseinrichtung (22, 26) aufweist, wobei die Erfassungseinrichtung (22, 26) dazu ausgelegt ist, Daten (P) umfassend eine Positionsinformation und/oder Umgebungsdaten des ersten Kraftfahrzeugs (10a, 10b, 10c) zu erfassen, wobei die Sendeeinrichtung (16) dazu ausgelegt ist, die Daten (P) an eine fahrzeugexterne Einrichtung (12, 32) zu übermitteln, wobei die Empfangseinrichtung (18) dazu ausgelegt ist, eine auf den Daten (P) basierende Steuerinformation (S) von der fahrzeugexternen Einrichtung (12, 32) zu empfangen, und wobei die Steuereinrichtung (28) dazu ausgelegt ist, die mindestens eine Lichteinheit (22, 26) in Abhängigkeit von der durch die übermittelte Steuerinformation (S) beinhaltete Information, ob das Kraftfahrzeug (10a, 10b, 10c) das letzte einer Fahrzeugkolonne (10) darstellt oder nicht, zu steuern,
**dadurch gekennzeichnet, dass**
die Einrichtung eine fahrzeugexterne Einrichtung darstellt und die Steuereinrichtung (28) dazu ausgelegt ist, die Lichteinheit (14, 34) derart zu steuern, dass, nur wenn das erste Kraftfahrzeug (10a, 10b, 10c) nicht das letzte Kraftfahrzeug (10a, 10b, 10c) der Fahrzeugkolonne (10) darstellt, unter zumindest einer der Bedingungen:
- dass das erste Kraftfahrzeug (10a, 10b, 10c) stillsteht; oder
- dass ein Motor des ersten Kraftfahrzeugs (10a, 10b, 10c) abgeschaltet ist;
eine eingeschaltete Bremsleuchte (14) der Lichteinheit (14, 34) ausgeschaltet wird, so dass die eingeschalteten Bremsleuchte erst nach einer vorbestimmten Latenzzeit nach festgestelltem Fahrzeugstillstand oder nach Abschaltung des Motors abgeschaltet wird.

## Claims

1. Method for controlling at least one light unit (14, 34) of a vehicle external light unit for a first motor vehicle (10a, 10b, 10c) in a motorcade (10) with at least one second motor vehicle (10a, 10b, 10c),
wherein the first motor vehicle (10a, 10b, 10c) transmits data (P) comprising position information and/or environmental data of the first motor vehicle (10a, 10b, 10c) to a device (12, 32), and the device external to the vehicle (12, 32), based on the received data (P), transmits control information (S) to the first motor vehicle (10a, 10b, 10c), and the first motor vehicle (10a, 10b, 10c) controls the at least one light unit (14, 34) as a function of the transmitted control information (S), wherein the control information (S) takes into account whether the first motor vehicle (10a, 10b, 10c) constitutes the last vehicle of the motorcade (10) or not,
**characterised in that**
the device constitutes a device external to the vehicle and the light unit (14, 34) is controlled such that, only if the first motor vehicle (10a, 10b, 10c) does not constitute the last motor vehicle (10a, 10b, 10c) of the motorcade (10), under at least one of the following conditions:
- that the first motor vehicle (10a, 10b, 10c) is stationary; or
- that an engine of the first motor vehicle (10a, 10b, 10c) is switched off;
a switched on brake light (14) of the light unit (14, 34) is switched off, wherein the switched on brake light is switched off only after a predetermined latency after the vehicle has been stopped or after the engine has been switched off.

2. Method according to claim 1,
**characterised in that**
a sensor device (22) of the first motor vehicle (10a, 10b, 10c), in particular a distance sensor, detects environmental data of the first motor vehicle (10a, 10b, 10c), which are transmitted to the device external to the vehicle (12, 32), wherein the device external to the vehicle (12, 32) determines a position of the first motor vehicle (10a, 10b, 10c) in relation to the motorcade (10) on the basis of the transmitted environmental data.

3. Method according to any one of the preceding claims,
**characterised in that**
the first motor vehicle (10a, 10b, 10c) determines first geographical position information of a current position of the first motor vehicle (10a, 10b, 10c) as the position information, in particular in the form of GPS coordinates of the first motor vehicle (10a, 10b, 10c), and transmits to the device external to the vehicle (12, 32).

4. Method according to any one of the preceding claims,
**characterised in that**
the device external to the vehicle (12, 32) also receives second geographical position information of the at least one second motor vehicle (10a, 10b, 10c) from the at least one second motor vehicle (10a, 10b, 10c) of the motorcade (10), wherein a position of the first motor vehicle (10a, 10b, 10c) in relation to the motorcade (10) is determined on the basis of the first and second geographical position information.

5. Method according to any one of the preceding claims,
**characterised in that**
the device external to the vehicle (12, 32) evaluates the received data (P) and determines the control information (S) which is transmitted to the first motor vehicle (10a, 10b, 10c) depending on the evaluation.

6. Motor vehicle (10a, 10b, 10c) with motor vehicle external light unit with at least one light unit (14, 34), wherein the motor vehicle (10a, 10b, 10c) has a transmission device (16), a receiver device (18), a control device (28) and a detection device (22, 26), wherein the detection device (22, 26) is designed to detect data (P) comprising position information and/or environmental data of the first motor vehicle (10a, 10b, 10c), wherein the transmission device (16) is designed to transmit the data (P) to a device external to the vehicle (12, 32), wherein the receiver device (18) is designed to receive control information (S), based on the data (P), from the vehicle-external device (12, 32), and wherein the control device (28) is designed to control the at least one light unit (22, 26) depending on the information contained by the transmitted control information (S) as to whether the motor vehicle (10a, 10b, 10c) constitutes the last vehicle of a motorcade (10) or not,
**characterised in that**
the device constitutes a device external to the vehicle and the control device (28) is designed to control the light unit (14, 34) in such a way that, only if the first motor vehicle (10a, 10b, 10c) does not constitute the last motor vehicle (10a, 10b, 10c) of the motorcade (10), under at least one of the following conditions:
- that the first motor vehicle (10a, 10b, 10c) is stationary; or
- that an engine of the first motor vehicle (10a, 10b, 10c) is switched off;
a switched on brake light (14) of the light unit (14, 34) is switched off, so that the switched on brake light is switched off only after a predetermined latency after the vehicle has been stopped or after the engine has been switched off.

## Revendications

1. Procédé de commande d'au moins une unité lumineuse (14, 34) d'un éclairage extérieur de véhicule d'un premier véhicule (10a, 10b, 10c) dans une colonne de véhicules (10) comprenant au moins un second véhicule (10a, 10b, 10c),
dans lequel le premier véhicule (10a, 10b, 10c) transmet des données (P) comprenant une information de position et/ou des données environnementales du premier véhicule (10a, 10b, 10c) à un dispositif (12, 32), et le dispositif externe au véhicule (12, 32) transmet sur la base des données reçues (P) une information de commande (S) au premier véhicule (10a, 10b, 10c) et le premier véhicule (10a, 10b, 10c) commande la au moins une unité lumineuse (14, 34) en fonction de l'information de commande (S) transmise, moyennant quoi l'information de commande (S) tient compte du fait que le premier véhicule (10a, 10b, 10c) représente ou non le dernier de la colonne de véhicules (10),
**caractérisé en ce que**
le dispositif représente un dispositif externe au véhicule et l'unité lumineuse (14, 34) est commandée de telle sorte que, uniquement si le premier véhicule (10a, 10b, 10c) ne représente pas le dernier véhicule (10a, 10b, 10c) de la colonne de véhicules (10), en tenant compte d'au moins une des conditions suivantes :
- le premier véhicule (10a, 10b, 10c) est à l'arrêt ; ou
- un moteur du premier véhicule (10a, 10b, 10c) est coupé ;
un feu stop (14) allumé de l'unité lumineuse (14, 34) est mis hors tension, le feu stop allumé étant désactivé seulement après un temps d'attente prédéfini après arrêt constaté du véhicule ou après coupure du moteur.

2. Procédé selon la revendication 1,
**caractérisé en ce que**
un dispositif de capteur (22) du premier véhicule (10a, 10b, 10c), en particulier un capteur de distance, détecte les données environnementales du premier véhicule (10a, 10b, 10c) qui sont transmises au dispositif externe au véhicule (12, 32), moyennant quoi le dispositif externe au véhicule (12, 32) détermine, sur la base des données environnementales transmises, une position du premier véhicule (10a, 10b, 10c) par rapport à la colonne de véhicules (10).

3. Procédé selon l'une des revendications précédentes,
**caractérisé en ce que**
le premier véhicule (10a, 10b, 10c) détermine en tant qu'information de position une première information de position géographique d'une position actuelle du premier véhicule (10a, 10b, 10c), en particulier sous la forme de coordonnées GPS du premier véhicule (10a, 10b, 10c), et la transmet au dispositif externe au véhicule (12, 32).

4. Procédé selon l'une des revendications précédentes,
**caractérisé en ce que**
le dispositif externe au véhicule (12, 32) reçoit du au moins un second véhicule (10a, 10b, 10c) de la colonne de véhicules (10) également une seconde information de position géographique du au moins un second véhicule (10a, 10b, 10c), une position du premier véhicule (10a, 10b, 10c) par rapport à la colonne de véhicules (10) étant déterminée sur la base de la première et de la seconde informations de position géographique.

5. Procédé selon l'une des revendications précédentes,
**caractérisé en ce que**
le dispositif externe au véhicule (12, 32) évalue les données reçues (P) et définit en fonction de l'évaluation l'information de commande (S) qui est transmise au premier véhicule (10a, 10b, 10c).

6. Véhicule (10a, 10b, 10c) avec un éclairage extérieur de véhicule comprenant au moins une unité lumineuse (14, 34), dans lequel le véhicule (10a, 10b, 10c) comprend un dispositif émetteur (16), un dispositif récepteur (18), un dispositif de commande (28) et un dispositif de détection (22, 26), le dispositif de détection (22, 26) étant conçu de manière à détecter des données (P) comprenant une information de position et/ou des données environnementales du premier véhicule (10a, 10b, 10c),
dans lequel le dispositif émetteur (16) est conçu de manière à transmettre les données (P) au dispositif externe au véhicule (12, 32), dans lequel le dispositif récepteur (18) est conçu de manière à recevoir une information de commande (S) basée sur les données (P) depuis le dispositif externe au véhicule (12, 32), et dans lequel le dispositif de commande (28) est conçu de manière à commander la au moins une unité lumineuse (22, 26) en fonction de l'information incluse dans l'information de commande (S) transmise, à savoir si le véhicule (10a, 10b, 10c) représente ou non le dernier d'une colonne de véhicules (10),
**caractérisé en ce que**
le dispositif représente un dispositif externe au véhicule et le dispositif de commande (28) est conçu de manière à commander l'unité lumineuse (14, 34), de telle sorte que, uniquement si le premier véhicule (10a, 10b, 10c) ne représente pas le dernier véhicule (10a, 10b, 10c) de la colonne de véhicules (10), en tenant compte d'au moins une des conditions suivantes :
- le premier véhicule (10a, 10b, 10c) est à l'arrêt ; ou
- un moteur du premier véhicule (10a, 10b, 10c) est coupé ;
un feu stop (14) allumé de l'unité lumineuse (14, 34) est mis hors tension, de sorte que le feu stop allumé est désactivé seulement après un temps d'attente prédéfini après arrêt constaté du véhicule ou après coupure du moteur.
